## Europäisches Patentamt

## European Patent Office

## Office européen des brevets

(19)

(11) Veröffentlichungsnummer: **0 246 415**
**B1**

(12) # EUROPÄISCHE PATENTSCHRIFT

(45) Veröffentlichungstag der Patentschrift:
02.08.89

(21) Anmeldenummer: **87103882.4**

(22) Anmeldetag: **17.03.87**

(51) Int. Cl.⁴: **B 60 K 20/04,** B 60 R 13/08

(54) Vorrichtung zur Luftschallabdichtung einer Aufbauöffnung eines Kraftfahrzeuges.

(30) Priorität: **14.05.86 DE 3616247**

(43) Veröffentlichungstag der Anmeldung:
**25.11.87 Patentblatt 87/48**

(45) Bekanntmachung des Hinweises auf die Patenterteilung:
**02.08.89 Patentblatt 89/31**

(84) Benannte Vertragsstaaten:
**DE ES FR GB IT NL SE**

(56) Entgegenhaltungen:
**DE-A-2 401 346**
**DE-U-7 312 696**

(73) Patentinhaber: **Dr.Ing.h.c. F. Porsche**
**Aktiengesellschaft, Porschestrasse 42, D-7000**
**Stuttgart 40 (DE)**

(72) Erfinder: **Fischle, Rüdiger, Dipl.- Ing. FH,**
**Niederhofenstrasse 33/2, D-7250 Leonberg (DE)**

**Beschreibung**

Die Erfindung bezieht sich auf eine Vorrichtung zur Luftschallabdichtung einer Aufbauöffnung nach dem Oberbegriff des Anspruchs 1.

Aus der DE-OS-2 353 417 ist ein Gangschalthebel für ein Kraftfahrzeug bekannt geworden, der in einer Aufbauöffnung angeordnet ist. Diese wird über Faltenbälge, die den Schalthebel dicht umschließen, zum Fahrzeuginnenraum hin abgeschlossen. Mit einer solchen Anordnung von übereinander angeordneten Faltenbälgen soll eine Luftschallabdichtung zum Fahrzeuginnenraum erzielt werden, was aber nur unzureichend möglich ist und wobei in nachteiliger Weise bei dieser Ausbildung eine Körperschallbrücke entstehen kann. Desweiteren ist es bekannt, die Öffnung mit einem Dämmteil aus einem Schaumstoff zu verschließen, was aber ein genau bearbeitetes, aufwendiges Teil bedingt.

Aus der DE-OS-2 401 346 ist ein Schalthebel bekannt, der im Bereich seines Durchtritts durch eine aufbauseitige Öffnung mit einem Schallisolationselement verbunden ist. Dieses umfaßt eine zwischen zwei elastische Elementen in einem Gehäuse eingeschlossene Luftkammer.

Die Aufgabe der Erfindung ist es, eine Vorrichtung der im Oberbegriff des Anspruchs 1 aufgezeigten Art derart zu verbessern, daß bei bedingt bewegten Teilen innerhalb einer Öffnung eine verbesserte Luftschallabdichtung zum Fahrzeuginnenraum gewährleistet ist und eine Körperschallübertragung vermieden wird, wobei Behinderungen der Schaltwege ausgeschlossen werden sollen.

Gemäß der Erfindung wird diese Aufgabe durch die kennzeichnenden Merkmale des Anspruchs 1 gelöst. Weitere vorteilhafte Ausbildungen der Erfindung beinhalten die Unteransprüche.

Die mit der Erfindung erzielten Vorteile bestehen im wesentlichen darin, daß aufgrund der Schallwellen-Reflektion an der Grenzschicht zwischen dem umgebenden Medium Luft und des Dämmantels (Gummi bzw. Flüssigkeit) der weitaus größte Anteil des Luftschalls reflektiert wird und somit nicht in den Fahrzeuginnenraum dringen kann. Dazu ist ein dichter Abschluß zwischen dem aufbauseitigen Ausschnitt und dem darin bewegten Schalthebel erforderlich.

Der Mantel des Elements liegt hierzu, unabhängig von der Stellung des Schalthebels, dicht an der Karosserie an. Es besteht in jeder Schalthebelstellung eine immer ausreichend dicke Schicht des flüssigen Mediums, so daß über die gesamte Fläche des Ausschnitts eine gleiche Luftschallabdichtung gewährleistet ist.

Durch die relativ weiche, flexible Gestaltung des mediumgefüllten Isolationselements wird eine Körperschallübertragung zwischen dem vibrierenden Aggregat (z. B. Zentralrohr) und dem Fahrzeugaufbau verhindert. Zur Karosserie hin können keine Kräfte und somit keine Schwingungen übertragen werden. Hierzu ist der Mantel des Elements derart gestaltet, daß die Schalthebelbewegungen unbehindert sind und keine straffe Verbindung zwischen dem Rohr und der Karosserie besteht. Außerdem wird durch die nur teilweise Füllung des Innenraums mit flüssigem Medium erreicht, daß beim Schalten keine Zugspannungen am Außenmantel entstehen und im Innenraum ein Überdruck unterbunden wird, d.h., daß die Schaltkräfte nicht beeinträchtigt werden.

Mit dem flexibel ausgebildeten Element sind Einbautoleranzen aufzufangen, so daß der Ausschnitt sowie die Öffnung nicht genau zueinander ausgerichtet sein müssen, wie es z. B. bei dem im Ausschnitt angeordneten bekannten Dämmteil aus Schaumstoff erforderlich wird.

Das Isolationselement ermöglicht es auch in gewissen Grenzen, ein Zittern der Schaltstange durch Verdrängen des flüssigen Mediums im Element aufzufangen.

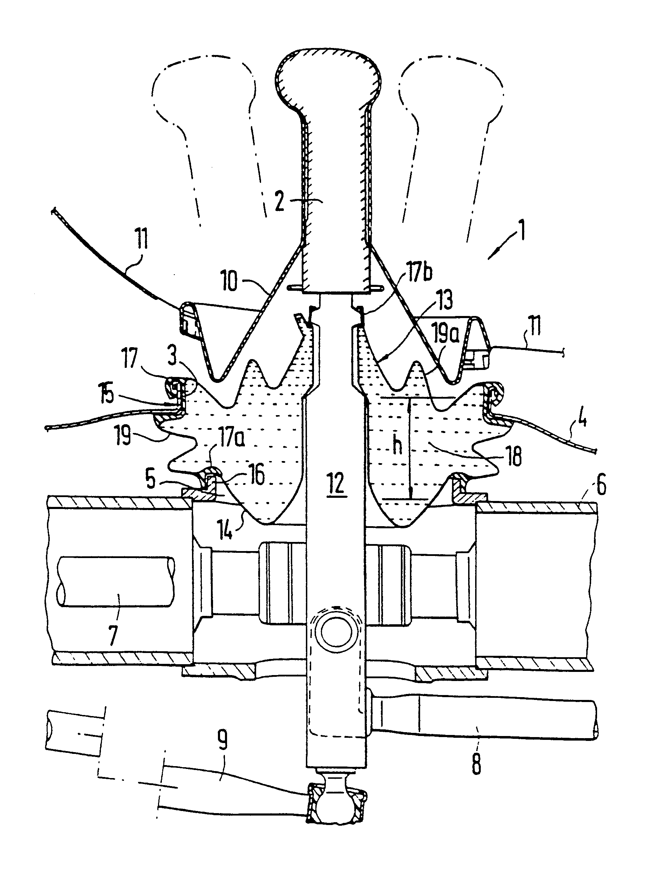

Die Erfindung wird anhand eines in der Zeichnung gezeigten Ausführungsbeispiels näher erläutert.

Die Zeichnung zeigt einen Handschalthebel mit einem Isolationselement, teilweise im Schnitt.

Die Luftschallabdichtvorrichtung 1 umfasst einen verschwenkbar gelagerten Gangschalthebel 2, der innerhalb eines Ausschnitts 3 im Fahrzeugaufbau 4 angeordnet ist und eine Öffnung 5 in einem Bauteil bzw. Öffnungen in einem Tragrohr 6 für eine Antriebswelle 7 durchdringt. Endseitig des Schalthebels 2 sind Gangschaltstangen 8 und 9 angelenkt.

Der Schalthebel 2 ist mit einem flexiblen Balg 10 in der Weise verbunden, daß er randseitig in einer Innenkonsole 11 gehalten wird und einen Abschluß zum Fahrzeuginnenraum hin bildet.

Zwischen dem Ausschnitt 3 im Fahrzeugaufbau 4 und der Öffnung 5 im Tragrohr 6 und dem Schaft 12 des Schalthebels 2 ist ein Schallisolationselement 13 angeordnet. Dieses besteht aus einem mit einem flüssigen oder gasförmigen Medium gefüllten, flexiblen Behälter, dessen Wandung 14 aus einem weichen und relativ dünnen Material besteht, wie z. B. Gummi. Zum dichten und sicheren Abschluß des Elements 13 am Rand 15 des Ausschnitts 3, am Rand 16 der Öffnung 5 und am Schaft 12 sind in diesen Befestigungsbereichen Werkstoffverdickungen 17, 17a und 17b am Mantel 14 vorgesehen.

Der Innenraum 18 des Elements 13 weist einen solchen Füllungsgrad mit einem flüssigen Medium wie z. B. mit Öl oder einem frostgeschützten Wassergemisch auf, daß beim Schalten keine Zugspannung in der Außenwandung auftritt und im Inneren kein Überdruck entstehen kann. Auch wird durch diesen Füllungsgrad gewährleistet, daß das Element bei jeder Gangstellung eine zur Luftschallabdichtung ausreichende Flüssigkeishöhe h aufweist.

Der Bereich des Elements 13 zwischen dem aufbauseitigen Ausschnitt 3 und der Öffnung 5 ist mit Wellrippen 19 ausgeführt, so daß keine straffe Verbindung zwischen dem Rohr 6 und dem Fahrzeugaufbau besteht. Ferner weist der Mantel 14 zwischen dem Aufbau 4 und dem Schaft 12 weitere Wellrippen 19a auf.

Die Verwendung des Schallisolationselements 13 ist auch denkbar zur Schallabdichtung von Gelenkwellen zu einem Kapselgehäuse einer Antriebseinheit.

Bei der Verwendung von Ölen hoher Viskosität im Element 13 kann zusätzlich zur Verhinderung des Durchtritts von Luftschall in den Fahrzeuginnenraum auch eine gewisse Ruhigstellung des Schalthebels 12 bei einem Hebelzittern erzielt werden.

**Patentansprüche**

1. Vorrichtung zur Luftschallabdichtung einer Aufbauöffnung eines Kraftfahrzeuges, insbesondere einer Öffnung für einen durchgeführten, schwenkbar gelagerten Gangschalthebel eines Kraftfahrzeuges, dadurch gekennzeichnet, daß in der Öffnung zwischen dem Schalthebel (2) und dem Aufbau (4) ein den Schaft (12) des Schalthebels (2) dicht umschließendes und am Öffnungsrand (15, 16) gehaltenes, mit einem flüssigen Medium gefülltes Schallisolationselement (13) angeordnet ist.

2. Vorrichtung nach Anspruch 1, dadurch gekennzeichnet, daß das Schallisolationselement (13) einen Mantel (14) aus einem relativ weichen Material aufweist, der im äußeren Befestigungsbereich zum Fahrzeugaufbau (4) und im inneren Befestigungsbereich zum Schalthebel (2) hin jeweils mit lokalen Verdichtungen (17, 17a, 17b) versehen ist.

3. Vorrichtung nach den Ansprüchen 1 oder 2, dadurch gekennzeichnet, daß der Schalthebel (2) in einer Öffnung (5) eines Tragrohres (6) angeordnet und durch einen Ausschnitt (3) im Fahrzeugaufbau (4) geführt ist und der Mantel (14) des Elements (3) zwischen dem Ausschnitt (3) und der Öffnung (5) Wellrippen (19) aufweist.

4. Vorrichtung nach den Ansprüchen 1 oder 2, dadurch gekennzeichnet, daß der Mantel (14) des Elements (13) zwischen dem Ausschnitt (3) im Fahrzeugaufbau (4) und dem Schaft (12) Wellrippen (19a) aufweist.

5. Vorrichtung nach Anspruch 1, dadurch gekennzeichnet, daß der Innenraum (18) des Elements (13) ohne Lufteinschluß zum Teil mit dem flüssigen Medium derart gefüllt ist, daß der Mantel (14) einen ungespannten Zustand besitzt.

6. Vorrichtung nach einem oder mehreren der vorhergehenden Ansprüche, dadurch gekennzeichnet, daß das Element (13) in jeder Gangstellung des Schalthebels (2) eine annähernd gleiche Flüssigkeitshöhe (h) aufweist.

7. Vorrichtung nach einem oder mehreren der vorhergehenden Ansprüche, dadurch gekennzeichnet, daß das flüssige Medium aus Öl oder einem frostgeschützten Wassergemisch besteht.

**Claims**

1. A device for sound-proofing the air-borne noise of an opening in the body of a motor vehicle, in particular an opening for a gearshift lever - pivotably mounted and passing therethrough - of a motor vehicle, characterized in that a sound-proofing element (13), which closely surrounds the shaft (12) of the gearshift lever (2) and is held on the opening edge (15, 16) and which is filled with a liquid medium, is arranged in the opening between the gearshift lever (2) and the body (4).

2. A device according to Claim 1, characterized in that the sound-proofing element (13) has a covering (14) of a relatively soft material which is provided with local thickened portions (17, 17a, 17b) in the external fastening area adjacent the vehicle body (4) and in the internal fastening area adjacent the gearshift lever (2) in each case.

3. A device according to Claim 1 or 2, characterized in that the gearshift lever (2) is arranged in an opening (5) in a support tube (6) and is led through an aperture (3) in the vehicle body (4), and the covering (14) of the element (13) is provided with corrugated ribs (19) between the aperture (3) and the opening (5).

4. A device according to Claim 1 or 2, characterized in that the covering (14) of the element (13) is provided with corrugated ribs (19a) between the aperture (3) in the vehicle body (4) and the shaft (12).

5. A device according to Claim 1, characterized in that the interior (18) of the element (13) is partly filled with the liquid medium without air inclusion in such a way that the covering (14) has an unstressed state.

6. A device according to one or more of the preceding Claims, characterized in that the element (13) has an approximately equal level of liquid (h) at each position of the gearshift lever (2).

7. A device according to one or more of the preceding Claims, characterized in that the liquid medium consists of oil or an antifreeze-protected water mixture.

**Revendications**

1. Dispositif d'isolation, contre le bruit du à l'air, d'une ouverture de carrosserie d'un véhicule à moteur, en particulier d'une ouverture pour un levier de changement de vitesse de véhicule à moteur monté de façon à pouvoir pivoter qui la traverse, caractérisé en ce qu'un élément d'isolation phonique (13) rempli d'un milieu liquide, entourant hermétiquement l'arbre (12) du levier de changement de vitesse (2) et maintenu au contact du bord (15, 16) de l'ouverture, est placé entre le levier de changement de vitesse (2) et la carrosserie (4).

2. Dispositif selon la revendication 1, caractérisé en ce que l'élément d'isolation phonique (13) comporte une paroi (14) en une matière relativement molle qui comporte des épaississements locaux (17, 17a, 17b), respectivement dans la zone de fixation extérieure à la carrosserie (4) du véhicule et dans la zone de fixation intérieure au levier de changement de vitesse (2).

3. Dispositif selon la revendication 1 ou 2, caractérisé en ce que le levier de changement de vitesse (2) est placé dans une ouverture (5) d'un tube de support (6) et passe par une découpure (3) de la carrosserie (4) du véhicule, et la paroi (14) de l'élément (3) comporte entre la découpure (3) et l'ouverture (5) des nervures d'ondulation (19).

4. Dispositif selon la revendication 1 ou 2, caractérisé en ce que la paroi (14) de l'élément (13) comporte entre la découpure (3) de la carrosserie (4) du véhicule de l'arbre (12) des nervures d'ondulation (19a).

5. Dispositif selon la revendication 1 caractérisé en ce que l'inventeur (8) de l'élément (13) est, sans inclusion d'air, rempli en partie du milieu liquide de façon que la paroi (14) soit dans un état non contraint.

6. Dispositif selon une ou plusieurs des revendications précédentes, caractérisé en ce que l'élément (13) présente une hauteur de liquide (h) sensiblement constante pour toute position de sélection du levier de changement de vitesse (2).

7. Dispositif selon une ou plusieurs des revendications précédentes, caractérisé en ce que le milieu liquide est constitué par de l'huile ou un mélange antigel comprenant de l'eau.